# EUROPEAN PATENT APPLICATION

(11) **EP 2 701 001 A1**
(43) Date of publication of application: **26.02.2014**
(21) Application number: 13180407.2
(22) Date of filing: 14.08.2013
(51) Int. Cl.: G02F 1/1335, G02B 5/30, G02F 1/1333, G02F 1/1343

(54) **Color filter substrate, array substrate, liquid crystal display apparatus, and manufacturing methods of the color filter substrate and the array substrate with in-cell polarizers**

(30) Priority: 23.08.2012 CN 201210303264
(71) Applicant: Boe Technology Group Co. Ltd., Beijing 100015 (CN); Beijing BOE Display Technology Co., Ltd., Beijing 100176 (CN)
(72) Inventor: Du, Yufan, 100176 Beijing (CN); Song, Yongzhi, 100176 Beijing (CN); Ma, Guojing, 100176 Beijing (CN)
(74) Representative: Klunker . Schmitt-Nilson . Hirsch

(57) **Abstract**

Embodiments of the present invention disclose a color filter substrate (31), an array substrate (33), a liquid crystal display apparatus, a manufacturing method of the color filter substrate and a manufacturing method of the array substrate. The color filter substrate (32) comprises a first substrate (311), a color filter layer (312), a planarization layer (314) and a first alignment layer (315). The color filter substrate (32) further comprises a first polarizing film (313) provided between the first base substrate (311) and the planarization layer (314). The array substrate (33), comprising a second base substrate (331), an insulation layer (333) and a second alignment layer (336), wherein the array substrate (33) further comprises a second polarizing film (332) provided between the second base substrate (331) and the insulation layer (333).

## Description

### TECHNICAL FIELD

Embodiments of the present invention relate to a color filter substrate, an array substrate, a liquid crystal display apparatus, and a manufacturing method of a color filter substrate and a manufacturing method of an array substrate.

### BACKGROUND

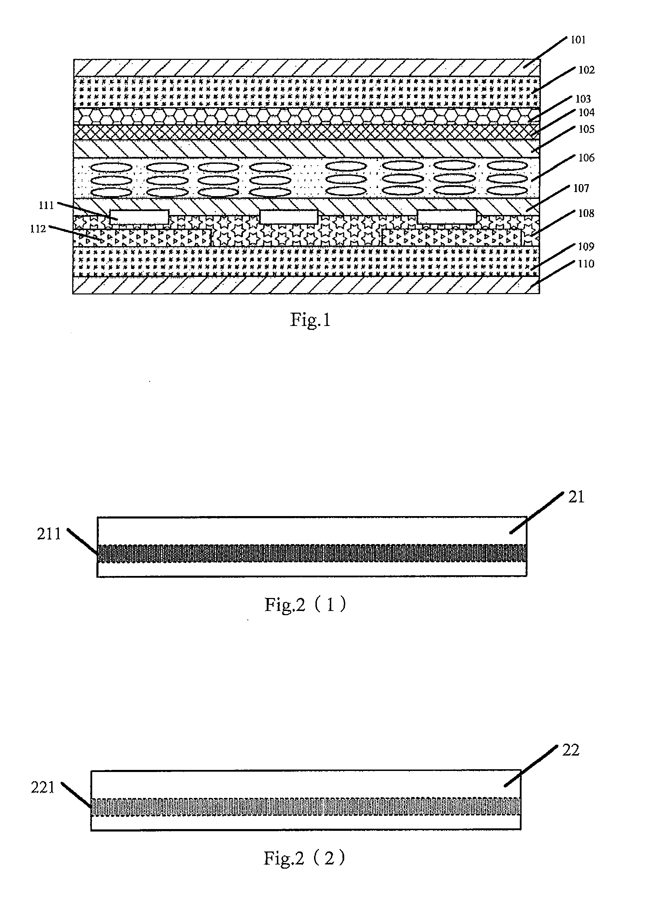

The structure of a conventional TFT-LCD (Thin Film Transistor Liquid Crystal Display) is shown in Fig. 1. As shown in Fig. 1, the TFT-LCD comprises: a first polarizing plate 101, a first glass substrate 102, a color filter layer 103, a planarization layer 104, a first alignment layer 105, a liquid crystal layer 106, a second alignment layer 107, an insulation layer 108, a second glass substrate 109, and a second polarizing plate 110. The first polarizing plate 101, the first glass substrate 102, the color filter layer 103, the planarization layer 104 and the first alignment layer 105 constitute a color filter substrate. The second polarizing plate 110, the second glass substrate 109, the insulation layer 108 and the second alignment layer 107 constitute an array substrate. The insulation layer 108 separates a pixel electrode 111 and a common electrode 112 from each other. Both of the first polarizing plate 101 and the second polarizing plate 110 are polarizing components and have the function of converting the light transmitted therethrough into a polarized light. The transmission axis of the first polarizing plate 101 and the transmission axis of the second polarizing plate 110 are perpendicular to each other.

It can be seen from the structure shown in Fig. 1 that the polarizing plates are essential parts in the present TFT-LCD, and the polarizing plates are respectively disposed on the outer surfaces of the color filter substrate and the array substrate. However, there exist the following several problems in the conventional technology using polarizing plates: (1) during the process of manufacturing the polarizing plate, it needs to stretch the raw film along a predetermined direction by a stretching apparatus to form the polarizing plate so that the light passing through the polarizing plate deflects along the predetermined direction, and during such process, a size of the polarizing plate would be limited by the stretching length achieved by the stretching apparatus is limited; (2) when attaching the polarizing plates to the outer surfaces of the color filter substrate and the array substrate, it is easy to remain air bubbles, dust and the like between the polarizing plates and the outer surfaces of the substrates, so that the adhesion between the polarizing plates and the outer surfaces of the substrates may be not strong enough; (3) it is not easy to control the alignment accuracy between the polarizing plates and the substrates when attaching the polarizing plates to the outer surfaces of the color filter substrate and the array substrate by using adhesive materials; (4) since the polarizing plates are disposed at the outermost of the color filter substrate and the array substrate, the surfaces of the polarizing plates are very likely to suffer from wear and tear, resulting in the reduction of the polarizing effect; (5) the manufacturing cost of the polarizing plates is relatively high.

Thus, the manufacturers of the liquid crystal display apparatus are anxious to develop a new polarizing component so as to avoid the above problems caused by the conventional polarizing plates.

### SUMMARY

According to one embodiment of the present invention, there is provided a color filter substrate. The color filter substrate comprises a first base substrate, a color filter layer, a planarization layer and a first alignment layer. The color filter substrate further comprises a first polarizing film provided between the first base substrate and the planarization layer.

According to another embodiment of the present invention, there is provided an array substrate. The array substrate comprises a second base substrate, an insulation layer and a second alignment layer. The array substrate further comprises a second polarizing film provided between the second base substrate and the insulation layer.

According to another embodiment of the present invention, there is provided a liquid crystal display apparatus. The liquid crystal display apparatus comprises: the above described color filter substrate; and/or the above described array substrate.

According to another embodiment of the present invention, there is provided a method of manufacturing the above described color filter substrate. The method comprises:
coating an azopolymer liquid crystal material thin film, and performing irradiation on the azopolymer liquid crystal material thin film by polarized UV light so as to form the first polarizing film having polarizing effect between the first base substrate and the planarization layer; or
coating a lyotropic liquid crystal material thin film, and waiting the completion of self-assembly alignment of lyotropic liquid crystal molecules in the lyotropic liquid crystal material thin film so as to form the first polarizing film having polarizing effect between the first base substrate and the planarization layer.

According to another embodiment of the present invention, there is provided a method of manufacturing the above described array substrate. The method comprises:
coating an azopolymer liquid crystal material thin film, and performing irradiation on the azopolymer liquid crystal material thin film by polarized UV light so as to form the second polarizing film having polarizing effect between the second base substrate and the insulation layer; or
coating a lyotropic liquid crystal material thin film, and waiting the completion of self-assembly alignment of lyotropic liquid crystal molecules in the lyotropic liquid crystal material thin film so as to form the second polarizing film having polarizing effect between the second base substrate and the insulation layer.

### BRIEF DESCRIPTION OF DRAWINGS

Fig. 1 is a structural schematic view of a conventional liquid crystal display apparatus;

Fig. 2(1) is a structural schematic view of a color filter substrate according to a first embodiment of the present invention;

Fig. 2(2) is a structural schematic view of an array substrate according to a second embodiment of the present invention;

Fig. 3 is a structural schematic view of a liquid crystal display apparatus according to a third embodiment of the present invention;

Fig. 4 is a view showing a process for manufacturing a first polarizing film by using azopolymer liquid crystal material in the third embodiment of the present invention;

Fig. 5 is a view showing a process for manufacturing a second polarizing film by using azopolymer liquid crystal material in the third embodiment of the present invention;

Fig. 6 is a view showing a process for manufacturing the first polarizing film by using lyotropic liquid crystal material in the third embodiment of the present invention;

Fig. 7 is a view showing a process for manufacturing the second polarizing film by using lyotropic liquid crystal material in the third embodiment of the present invention; and

Fig. 8 is a structural schematic view of a liquid crystal display apparatus according to a fourth embodiment of the present invention.

### DETAILED DESCRIPTION

In order to make objects, technical details and advantages of the embodiments of the invention apparent, the technical solutions of the embodiment will be described in a clearly and fully understandable way in connection with the drawings related to the embodiments of the invention. It is obvious that the described embodiments are just a part but not all of the embodiments of the invention. Based on the described embodiments herein, those skilled in the art can obtain other embodiment(s), without any inventive work, which should be within the scope of the invention.

In the following first to third embodiments, ADS (Advanced Super Dimension Switch) mode is described as an example. In the following fourth embodiment, TN (Twisted Nematic) mode is described as an example.

First Embodiment

The present embodiment provides a color filter substrate. As shown in Fig. 2(1), a first polarizing film 211 is formed inside the color filter substrate 21.

To achieve the color filter substrate 21 in the present embodiment, materials having molecular orientation may be used to fabricate the first polarizing film 211, so that the first polarizing film 211 not only can be formed inside the color filter substrate 21, but also can have the polarizing characteristics of converting the light transmitted therethrough into polarized light.

Preferably, the present embodiment adopts azopolymer liquid crystal material or lyotropic liquid crystal material to fabricate the first polarizing film 211. When fabricating the first polarizing film 211 by using the azopolymer liquid crystal material, an azopolymer liquid crystal material thin film is firstly coated, and then the azopolymer liquid crystal material thin film is irradiated by using polarized UV light so that the azopolymer liquid crystal material thin film has polarizing characteristics. When fabricating the first polarizing film 211 by using the lyotropic liquid crystal material, a lyotropic liquid crystal material thin film is firstly coated, and then the lyotropic liquid crystal molecules in the lyotropic liquid crystal material thin film are waited to complete self-assembly alignment (the completion of the self-assembly alignment requires about tens of seconds) so that the lyotropic liquid crystal material thin film has polarizing characteristics. When coating the azopolymer liquid crystal material thin film or the lyotropic liquid crystal material thin film in the present embodiment, apparatus such as an ink-jetter, a coater (for example, the coater is used for spin-coating, slit-coating, etc.), an APR plate (Asahikasei Photosensitive Resin Plate) and so on may be employed.

Preferably, in the present embodiment, the thickness of the first polarizing film 211 is less than 10 µm.

In the present embodiment, the color filter substrate 21 has a function of displaying various colors formed by mixing three primary colors R, G and B. In addition to the first polarizing film 211, the color filter substrate 21 may comprise from outside to inside: a first base substrate, which is used to support various function elements of the color filter substrate 21 and is generally fabricated by glass or quartz; a color filter layer, which is used to convert the light transmitted therethrough into light with R, G and B primary colors; a planarization layer, which is used to planarize the uneven surface of the layer that it contacts; a first alignment layer, whose surface has trenches in a certain direction so that the liquid crystal molecules in the liquid crystal layer of the liquid crystal display apparatus are able to align along the trenches. The first polarizing film 211 may be disposed between the first base substrate and the planarization layer. That is, the first polarizing film 211 may be disposed between the first base substrate and the color filter layer or between the color filter layer and the planarization layer. The reasons of such disposition are as follows: (1) when fabricating the first polarizing film 211 by using azopolymer liquid crystal material or lyotropic liquid crystal material, the first polarizing film 211 can not be disposed on the innermost side of the color filter substrate 21 for the azopolymer liquid crystal material or the lyotropic liquid crystal material itself belongs to liquid crystal material, that is, the first polarizing film 211 can not contact the liquid crystal layer of the liquid crystal display apparatus, otherwise it would cause the problem that the liquid crystal molecules in the first polarizing film 211 and the liquid crystal molecules in the liquid crystal layer of the liquid crystal display apparatus penetrate with each other; (2) the first polarizing layer 211 can not be disposed between the planarization layer and the first alignment layer because the first alignment layer generally is very thin (about several hundred angstroms), and it is very likely to cause the problem that the liquid crystal molecules in the first polarizing film 211 and the liquid crystal molecules in the liquid crystal layer of the liquid crystal display apparatus penetrate with each other by passing through the first alignment layer if the first polarizing film 211 is disposed between the planarization layer and the first alignment layer.

Compared with the conventional color filter substrate, the outer surface of the color filter substrate 21 according to the present embodiment does not need to be attached with the polarizing plate, and the first polarizing film 211 is formed inside the color filter substrate 21. By the color filter substrate according to the embodiment, the problem that the polarizing plates are easy to be damaged by wear and tear, the problem that air bubbles and dust are easy to occur between the polarizing plate and the outer surface of the color filter substrate and other similar problems can be avoided. In addition, by the color filter substrate according to the embodiment, the first polarizing film 211 may be fabricated by a coating process, which has a low manufacturing cost and a high precision and is suitable to fabricate polarizing films with various sizes, and the resultant first polarizing film 211 is more thinner than the conventional polarizing plate (the thickness of the first polarizing film 211 is less than 10µm, while the thickness of the conventional polarizing plate is 170∼180µm) so that the entire thickness of the liquid crystal display apparatus can be reduced.

Second Embodiment

The present embodiment provides an array substrate. As shown in Fig. 2(2), a second polarizing film 221 is formed inside the array substrate 22.

To achieve the array substrate 22 in the present embodiment, materials having molecular orientation may be used to fabricate the second polarizing film 221, so that the second polarizing film 221 not only can be formed inside the array substrate 22, but also can have the polarizing characteristics of converting the light transmitted therethrough into polarized light.

Preferably, the present embodiment adopts azopolymer liquid crystal material or lyotropic liquid crystal material to fabricate the second polarizing film 221. When fabricating the second polarizing film 221 by using the azopolymer liquid crystal material, an azopolymer liquid crystal material thin film is firstly coated, and then the azopolymer liquid crystal material thin film is irradiated by using polarized UV light so that the azopolymer liquid crystal material thin film has polarizing characteristics. When fabricating the second polarizing film 221 by using the lyotropic liquid crystal material, a lyotropic liquid crystal material thin film is firstly coated, and then the lyotropic liquid crystal molecules in the lyotropic liquid crystal material thin film are waited to complete self-assembly alignment (the completion of the self-assembly alignment requires about tens of seconds) so that the lyotropic liquid crystal material thin film has polarizing characteristics. When coating the azopolymer liquid crystal material thin film or the lyotropic liquid crystal material thin film in the present embodiment, apparatus such as an ink-jetter, a coater (for example, the coater is used for spin-coating, slit-coating, etc.), an APR plate (Asahikasei Photosensitive Resin Plate) and so on may be employed.

Preferably, in the present embodiment, the thickness of the second polarizing film 221 is less than 10 µm.

In the present embodiment, in addition to the second polarizing film 221, the array substrate 22 may comprise from outside to inside: a second base substrate, which may be made by glass and which is used to support various function elements of the array substrate 22; a common electrode, which may be made by transparent metal material and which is used to form an electric field for driving the liquid crystal molecules in the liquid crystal layer of the liquid crystal display apparatus to rotate with a pixel electrode; an insulation layer, which is used to insulate the common electrode from the pixel electrode; the pixel electrode, which may be made by transparent metal material and which is used to form the electric field for driving the liquid crystal molecules in the liquid crystal layer of the liquid crystal display apparatus to rotate with the common electrode; and a second alignment layer, whose surface has trenches in a certain direction so that the liquid crystal molecules in the liquid crystal layer of the liquid crystal display apparatus are able to align along the trenches. The second polarizing film 211 is disposed between the second base substrate and the insulation layer. The reasons of such disposition are as follows: (1) when fabricating the second polarizing film 221 by using azopolymer liquid crystal material or lyotropic liquid crystal material, the second polarizing film 221 can not be disposed on the innermost side of the array substrate 22 for the azopolymer liquid crystal material or the lyotropic liquid crystal material itself belongs to liquid crystal material, that is, the second polarizing film 221 can not contact the liquid crystal layer of the liquid crystal display apparatus, otherwise it would cause the problem that the liquid crystal molecules in the second polarizing film 221 and the liquid crystal molecules in the liquid crystal layer of the liquid crystal display apparatus penetrate with each other; (2) the second polarizing film 221 can not be disposed between the insulation layer and the second alignment layer because the second alignment layer generally is very thin (about several hundred angstroms), and it is very likely to cause the problem that the liquid crystal molecules in the second polarizing film 221 and the liquid crystal molecules in the liquid crystal layer of the liquid crystal display apparatus penetrate with each other by passing through the second alignment layer if the second polarizing film 221 is disposed between the insulation layer and the second alignment layer .

When fabricating the insulation layer in the conventional array substrate, an inorganic material such as silicon nitride or silicon dioxide and so on generally is deposited by a deposition process to form the insulation layer and such deposition process generally is performed under a high temperature. In the present embodiment, when the second polarizing film 221 is made by using azopolymer liquid crystal material or lyotropic liquid crystal material, the insulation layer is preferably made by using an organic material (such as, organic resin material) in order to avoid properties of the liquid crystal molecules in the second polarizing film 221 from being damaged due to the high temperature for forming the subsequent insulation layer and in order to make the insulation layer to have a better adhesion with the second polarizing film 221. Thus, in the case that the insulation layer is made of organic material, the process temperature for fabricating the insulation layer can be reduced so that the properties of the liquid crystal molecules in the second polarizing film 221 can be prevented from being damaged by the high temperature, and the insulation layer made by organic material and the second polarizing film 221 made by liquid crystal material can have a better adhesion with each other.

Compared with the conventional array substrate, the array substrate 22 according to the present embodiment does not need to attach the polarizing plate on its outer surface, and the second polarizing film 221 is formed inside the array substrate 22. By the array substrate according to the embodiment, the problem that the polarizing plates are easy to be damaged by wear and tear, the problem that air bubbles and dust are easy to occur between the polarizing plate and the outer surface of the array substrate and other similar problems can be avoided. In addition, by the array substrate according to the embodiment, the second polarizing film 221 may be fabricated by a coating process, which has a low manufacturing cost and a high precision and is suitable to fabricate polarizing films with various sizes, and the resultant second polarizing film 221 is more thinner than the conventional polarizing plate (the thickness of the second polarizing film 221 is less than 10µm, while the thickness of the conventional polarizing plate is 170∼180µm) so that the entire thickness of the liquid crystal display apparatus can be reduced.

Third Embodiment

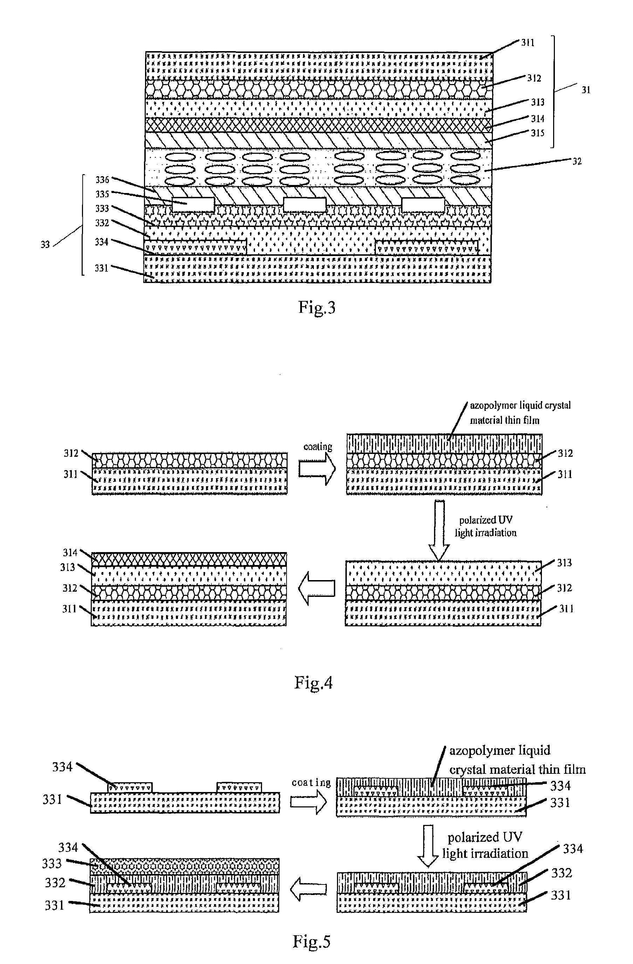

The present embodiment provides a liquid crystal display apparatus of ADS mode. As shown in Fig. 3, the liquid crystal display apparatus comprises a color filter substrate 31, a liquid crystal layer 32 and an array substrate 33. The color filter substrate 31 further comprises: a first base substrate 311, a color filter layer 312, a first polarizing film 313, a planarization layer 314 and a first alignment layer 315. The array substrate 33 further comprises: a second base substrate 331, a common electrode 334, a second polarizing film 332, an insulation layer 333, a pixel electrode 335 and a second alignment layer 336.

The first base substrate 311 is disposed on the outermost side of the color filter substrate 31 and may be made by glass. The color filter layer 312 is disposed on the inner side of the first base substrate 311 and is adjacent to the first base substrate 311. The first polarizing film 313 is disposed between the color filter layer 312 and the planarization layer 314, and its transmission axis is in a horizontal direction. The first polarizing film 313 is used to convert the light transmitted therethrough into light polarized in the horizontal direction. The planarization layer 314 is disposed between the first polarizing film 313 and the first alignment layer 315. The first alignment layer 315 is disposed on the innermost side of the color filter substrate 31, that is, the first alignment layer 315 is disposed between the planarization layer 314 and the liquid crystal layer 32.

The second base substrate 331 is disposed on the outermost side of the array substrate 33 and may be made by glass. The second base substrate 331 is used to support various functional elements of the array substrate 33. The second polarizing film 332 is disposed on the inner side of the second base substrate 331 and is adjacent to the second base substrate 331. The transmission axis of the second polarizing film 332 is in a vertical direction, and the second polarizing film 332 is used to convert the light transmitted therethrough into light polarized in the vertical direction. The common electrode 334 is provided between the second base substrate 331 and the second polarizing film 332. The insulation layer 333 is disposed between the second polarizing film 332 and the second alignment layer 336 and is used to insulate the common electrode 334 from the pixel electrode 335. The pixel electrode 335 is disposed between the insulation layer 333 and the second alignment layer 336. The second alignment layer 336 is disposed on the innermost side of the array substrate 33, that is, the second alignment layer 336 is disposed between the insulation layer 333 and the liquid crystal layer 32. The surface of the second alignment layer 336 have trenches in a certain direction so that the liquid crystal molecules in the liquid crystal layer 22 align along the direction of the trenches.

In the present embodiment, both of the thicknesses of the first polarizing film 313 and the second polarizing film 332 are less than 10µm.

To achieve the liquid crystal display apparatus according to the present embodiment, materials having molecular orientation may be used to fabricate the first polarizing film 313 and the second polarizing film 332. Preferably, azopolymer liquid crystal material or lyotropic liquid crystal material is used to fabricate the first polarizing film 313 and the second polarizing film 332 in the present embodiment.

The processes of fabricating the first polarizing film 313 and the second polarizing film 332 in the present embodiment by using azopolymer liquid crystal material will be described below.

As shown in Fig. 4, an azopolymer liquid crystal material thin film is coated on the color filter layer 312 on the first base substrate 311 by apparatus such as an ink-jetter, a coater (for example, the coater is used for spin-coating, slit-coating, etc.), a APR plate (Asahikasei Photosensitive Resin Plate) and so on, and then the azopolymer liquid crystal material thin film is irradiated by a polarized UV light so that the azopolymer liquid crystal molecules in the azopolymer liquid crystal material thin film align in a certain direction, and thereby the azopolymer liquid crystal material thin film will have the function of converting the light transmitted therethrough into light polarized in the horizontal direction , and the first polarizing film 313 having polarizing effect is formed. Then, the planarization layer 314 is formed on the first polarizing film 313 on the first base substrate 311.

As shown in Fig. 5, an azopolymer liquid crystal material thin film is coated on the common electrode 334 on the second base substrate 331, then the azopolymer liquid crystal material thin film is irradiated by another polarized UV light so that the azopolymer liquid crystal molecules in the azopolymer liquid crystal material thin film align in another certain direction, and thereby the azopolymer liquid crystal material thin film will have the function of converting the light transmitted therethrough into light polarized in the vertical direction and the second polarizing film 332 having a polarizing effect is formed. Then, the insulation layer 333 is further formed on the second polarizing film 332 on the second base substrate 331.

The processes of fabricating the first polarizing film 313 and the second polarizing film 332 in the present embodiment by using lyotropic liquid crystal material will be described below.

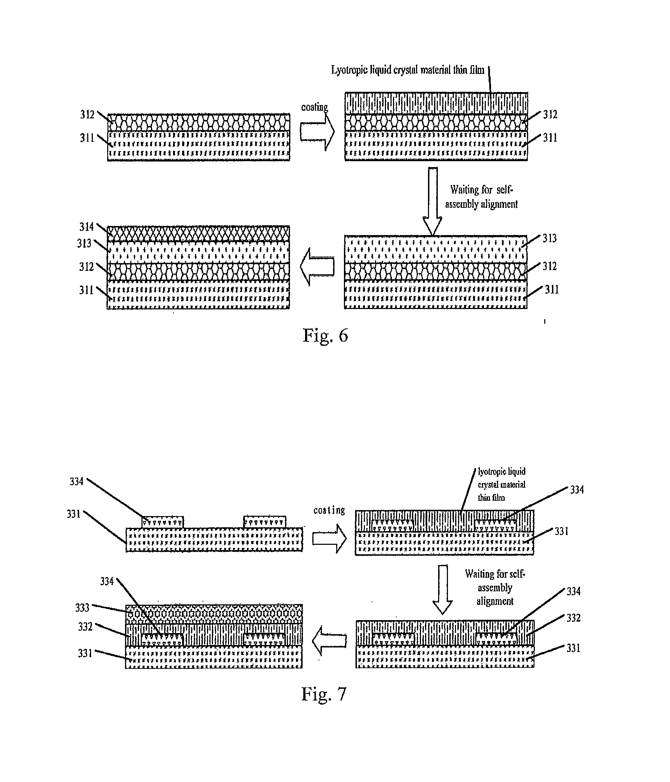

As shown in Fig. 6, a lyotropic liquid crystal material thin film is coated on the color filter layer 312 on the first base substrate 311 by apparatus such as an ink-jetter, a coater (for example, the coater is used for spin-coating, slit-coating, etc.), a APR plate (Asahikasei Photosensitive Resin Plate) and so on, then the lyotropic liquid crystal molecules in the lyotropic liquid crystal material thin film are waited to complete self-assembly alignment (the completion of the self-assembly alignment requires about tens of seconds) so that the lyotropic liquid crystal molecules in the lyotropic liquid crystal material thin film align in a certain direction, and thereby the lyotropic liquid crystal material thin film will have the function of converting the light transmitted therethrough into light polarized in the horizontal direction and the first polarizing film 313 having a polarizing effect is formed. Then, the planarization layer 314 is formed on the first polarizing film 313 on the first base substrate 311.

As shown in Fig. 7, a lyotropic liquid crystal material thin film is coated on the common electrode 334 on the second base substrate 331, then the lyotropic liquid crystal molecules in the lyotropic liquid crystal material thin film are waited to complete self-assembly alignment (the completion of the self-assembly alignment requires about tens of seconds) so that the lyotropic liquid crystal molecules in the lyotropic liquid crystal material thin film align in another certain direction, and thereby the lyotropic liquid crystal material thin film will have the function of converting the light transmitted therethrough into light polarized in the vertical direction and the second polarizing film 332 having a polarizing effect is formed. Then, the insulation layer 333 is further formed on the second polarizing film 332 on the second base substrate 331.

When fabricating the insulation layer in the conventional array substrate, an inorganic material such as silicon nitride or silicon dioxide and so on is generally deposited by a deposition process to form the insulation layer and such deposition process is generally performed under a high temperature. In the present embodiment, when the second polarizing film 332 is made by using azopolymer liquid crystal material or lyotropic liquid crystal material, preferably, the insulation layer is made by using an organic material (such as, organic resin material) in order to avoid properties of the liquid crystal molecules in the second polarizing film 332 from being damaged due to the high temperature for forming the subsequent insulation layer 333 and in order to make the insulation layer 333 to have a better adhesion with the second polarizing film 332. Thus, in the case that the insulation layer 333 is made of organic material, the process temperature for fabricating the insulation layer 333 can be reduced so that the properties of the liquid crystal molecules in the second polarizing film 332 can be prevented from being damaged by the high temperature, and the insulation layer 333 made by organic material and the second polarizing film 332 made by liquid crystal material can have a better adhesion with each other.

Compared with the conventional liquid crystal display apparatus, the color filter substrate 31 and the array substrate 33 in the liquid crystal display apparatus according to the present embodiment do not need to attach the polarizing plate on their outer surfaces, the first polarizing film 313 is formed inside the color filter substrate 31 and the second polarizing film 332 is formed inside the array substrate 33. By the liquid crystal display apparatus according to the present embodiment, the problem that the polarizing plates are easy to be damaged by wear and tear, the problem that air bubbles and dust are easy to occur between the polarizing plate and the outer surface of the color filter substrate/array substrate and other similar problems can be avoided. In addition, by the liquid crystal display apparatus according to the present embodiment, the first polarizing film 313 and the second polarizing film 332 may be fabricated by a coating process, which has a low manufacturing cost and a high precision and is suitable to fabricate polarizing films with various sizes, and the resultant first and second polarizing films 313 and 332 are more thinner than the conventional polarizing plate so that the entire thickness and weight of the liquid crystal display apparatus can be reduced.

Fourth Embodiment

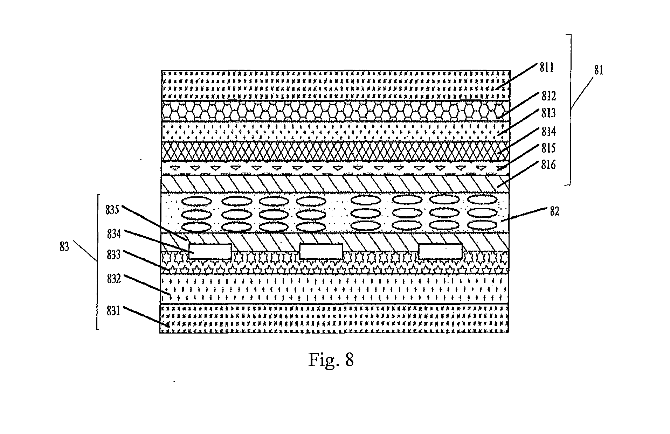

The present embodiment provides a liquid crystal display apparatus of TN mode. As shown in Fig. 8, the liquid crystal display apparatus comprises a color filter substrate 81, a liquid crystal layer 82 and an array substrate 83. The color filter substrate 81 further comprises: a first base substrate 811, a color filter layer 812, a first polarizing film 813, a planarization layer 814, a common electrode layer 815 and a first alignment layer 816. The array substrate 83 further comprises: a second base substrate 831, a second polarizing film 832, an insulation layer 833, a pixel electrode 834 and a second alignment layer 835.

The liquid crystal display apparatus of TN mode according to the present embodiment differs from the liquid crystal display apparatus of ADS mode according to the third embodiment in that: the common electrode layer 815 in the present embodiment is provided in the color filter substrate 81 rather than in the array substrate 83. Accordingly, the electric field for driving the liquid crystal molecules in the liquid crystal layer formed by the common electrode layer 815 and the pixel electrode 834 in the present embodiment is different from the electric field formed in the third embodiment.

In the liquid crystal display apparatus according to the present embodiment, the color filter substrate 81 and the array substrate 83 do not need to attach the polarizing plate on their outer surfaces, the first polarizing film 813 is formed inside the color filter substrate 81 and the second polarizing film 832 is formed inside the array substrate 83. In the liquid crystal display apparatus according to the present embodiment, the problem that the polarizing plates are easy to be damaged by wear and tear, the problem that air bubbles and dust are easy to occur between the polarizing plate and the outer surface of the color filter substrate/array substrate and other similar problems can be avoided. In addition, in the liquid crystal display apparatus according to the present embodiment, the first polarizing film 813 and the second polarizing film 832 may be fabricated by a coating process, which has a low manufacturing cost and a high precision and is suitable to fabricate polarizing films of various sizes, and the resultant first and second polarizing films 813 and 832 are more thinner than the conventional polarizing plate so that the entire thickness and weight of the liquid crystal display apparatus can be reduced.

It should be noted that, the liquid crystal display apparatus according to the embodiments of the present invention may be any liquid crystal display apparatus having a polarizing component. In addition to the ADS mode liquid crystal display apparatus according to the above first to third embodiments and the TN mode liquid crystal display apparatus according to the above fourth embodiment, the liquid crystal display apparatus according to the embodiments of the present invention may also be a liquid crystal display apparatus of IPS (In-Plane Switching) mode, and the like, or an organic electroluminescence display apparatus.

The foregoing are only preferable embodiments of the invention. It is to be noted that, those with ordinary skills in the art may make various modifications and changes without departing the technical principle of the invention, and these modifications and changes should be deemed to be within the protection scope of the invention.

## Claims

1. A color filter substrate, comprising a first base substrate, a color filter layer, a planarization layer and a first alignment layer,
wherein the color filter substrate further comprises a first polarizing film provided between the first base substrate and the planarization layer.

2. The color filter substrate according to Claim 1, wherein the first polarizing film is provided between the first base substrate and the color filter layer.

3. The color filter substrate according to Claim 1, wherein the first polarizing film is provided between the color filter layer and the planarization layer.

4. The color filter substrate according to any one of Claims 1-3, wherein the first polarizing film is made by azopolymer liquid crystal material or lyotropic liquid crystal material.

5. The color filter substrate according to any one of Claims 1-3, wherein a thickness of the first polarizing film is less than 10µm.

6. An array substrate, comprising a second base substrate, an insulation layer and a second alignment layer,
wherein the array substrate further comprises a second polarizing film provided between the second base substrate and the insulation layer.

7. The array substrate according to Claim 6, wherein the second polarizing film is made by azopolymer liquid crystal material or lyotropic liquid crystal material.

8. The array substrate according to Claim 7, wherein the insulation layer is made by organic material.

9. The array substrate according to any one of Claims 6-8, wherein a thickness of the second polarizing film is less than 10µm.

10. A liquid crystal display apparatus, wherein the liquid crystal display apparatus comprises:
the color filter substrate according to any one of Claims 1-5; and/or
the array substrate according to any one of Claims 6-9.

11. A method of manufacturing the color filter substrate according to any one of Claims 1-5, wherein the method comprises:
coating an azopolymer liquid crystal material thin film, and performing irradiation on the azopolymer liquid crystal material thin film by polarized UV light so as to form the first polarizing film having polarizing effect between the first base substrate and the planarization layer; or
coating a lyotropic liquid crystal material thin film, and waiting the completion of self-assembly alignment of lyotropic liquid crystal molecules in the lyotropic liquid crystal material thin film so as to form the first polarizing film having polarizing effect between the first base substrate and the planarization layer.

12. A method of manufacturing the array substrate according to any one of Claims 6-9, wherein the method comprises:
coating an azopolymer liquid crystal material thin film, and performing irradiation on the azopolymer liquid crystal material thin film by polarized UV light so as to form the second polarizing film having polarizing effect between the second base substrate and the insulation layer; or
coating a lyotropic liquid crystal material thin film, and waiting the completion of self-assembly alignment of lyotropic liquid crystal molecules in the lyotropic liquid crystal material thin film so as to form the second polarizing film having polarizing effect between the second base substrate and the insulation layer.
